Europäisches Patentamt

European Patent Office

Office européen des brevets

(19)

(11) Veröffentlichungsnummer: **0 205 665**
**B1**

(12) **EUROPÄISCHE PATENTSCHRIFT**

(45) Veröffentlichungstag der Patentschrift: **23.05.90**

(51) Int. Cl.⁵: **A 47 J 45/06**

(21) Anmeldenummer: **85116527.4**

(22) Anmeldetag: **23.12.85**

(54) **Geschirrgriff für die Befestigung an einem Bolzen.**

(30) Priorität: **18.06.85 DE 8517666 u**

(43) Veröffentlichungstag der Anmeldung:
**30.12.86 Patentblatt 86/52**

(45) Bekanntmachung des Hinweises auf die
Patenterteilung:
**23.05.90 Patentblatt 90/21**

(84) Benannte Vertragsstaaten:
**CH DE FR GB IT LI**

(56) Entgegenhaltungen:
**DE-A-2 528 149**
**DE-A-3 016 470**
**US-A-2 362 720**
**US-A-3 878 584**

(73) Patentinhaber: **Heinrich Baumgarten KG
Spezialfabrik für Beschlagteile
Postfach 1620
D-5908 Neunkirchen (DE)**

(72) Erfinder: **Fischbach, Wolfgang
Heinrich-Heine-Strasse 4
D-5243 Daaden (DE)**

(74) Vertreter: **Missling, Arne, Dipl.-Ing. et al
Patentanwälte Dipl.-Ing. R. Schlee Dipl.-Ing. A.
Missling Bismarckstrasse 43
D-6300 Giessen (DE)**

Courier Press, Leamington Spa, England.

EP 0 205 665 B1

**Beschreibung**

Die Erfindung betrifft einen Geschirrgriff gemäß dem Oberbegriff von Anspruch 1.

Die US-A-3 878 584 beschreibt einen solchen Handgriff, der auf einen U-Steg eines Geschirrs aufsteckbar ist. Zur Befestigung dient eine in einer Höhlung des Griffes festgelegte Blattfeder, die ein abgewinkeltes Ende hat, das sich an einem schrägen Abschnitt des U-Steges abstützt. Das andere Feder-Ende bildet einen elastischen Schenkel, der einerseits mit einem Rückenteil ebenfalls an dem U-Steg zur Anlage kommt, und zwar nahe der Geschirrwandung, während sich ein Auslaufteil an das Endstück des Griffes innen anlegt. Ein oberer Keil im Inneren der Griffhöhlung drückt die Stegschenkel auseinander, um das satte Anliegen von Flanschkanten in der Höhlung zu bewirken und so den Griff sicher sowie drehfest zu halten. Die Montage setzt jedoch einmaliges, sofort lagerichtiges Einpassen des Griffes voraus. Muß dieser von dem U-Steg abgezogen werden, so ist eine Verformung des Stütz-Endes der Feder nicht auszuschließen, deren Funktion dann nicht mehr gewährleistet ist. Zu dem ist es notwendig, die Feder durch eine Schraube festzulegen, was den Konstruktions- und Montageaufwand vergrößert.

Ein vergleichbarer Geschirrgriff ist aus der DE-C-2 340 723 bekannt. Er kann große Reaktionskräfte ohne Schäden für den Griffkörper aufnehmen, noch ist es nachteilig, daß eine Bügelfeder, deren beide Schenkel im Griffkörper festgelegt sind, nur geringe Toleranzen ausgleichen kann. Bei der Fertigung der Geschirre selbst entstehen aber nicht selten beispielsweise durch das Anschweißen des Bolzens an der Geschirrwandung größere Sollmaß-Abweichungen.

Eine weitere Griffbefestigung ist in der DE-A-2 528 149 beschrieben. Hierbei sind U-förmige Drahtfedern vorgesehen, deren abgebogene Schenkel-Enden in Ausnehmungen gehaltert sind, während ihr Scheitel in eine schräge Verriegelungsfläche an vom Geschirr seitlich abstehenden Steglaschen eingreift. Gleitflächen dienen dazu, die Scheitel der Drahtfedern beim Aufstecken des Griffes abzulenken, bis sie hinter der Verriegelungsfläche der Steglaschen rastend einfallen. Selbst wenn sie dabei deren Aussparungs-Grund erreichen, ist es möglich, daß unvermeidliche Toleranzen zu einem wackeligen Sitz des Griffes führen.

Der Erfindung liegt die Aufgabe zugrunde, einen Geschirrgriff der eingangs genannten Art so auszubilden, daß er kostengünstig herzustellen und vergleichsweise einfach zu montieren ist. Ferner soll eine einfach geformte Feder verwendet werden können, die über große Hebelarme auf den Bolzen einwirkt, einen relativ weiten Toleranzausgleich erbringt, eine allseitige Führung des Bolzens im Griff ermöglicht und eine Demontage des Griffes vom Geschirr erlaubt.

Die Hauptmerkmale der Erfindung sind im kennzeichnenden Teil von Anspruch 1 angegeben. Ausgestaltungen sind Gegenstand der Ansprüche 2 bis 10.

Bei einem erfindungsgemäßen Geschirrgriff ist der Federrücken in Längsrichtung des Bolzens angeordnet. Die Feder greift am Bolzen an zwei Stützstellen an, die einen relativ großen Abstand voneinander haben. Dadurch wird der Bolzen an die gegenüberliegende Wand der Ausnehmung gedrückt und mit relativ kleinen Federkräften ein Kippen des Bolzens sicher ausgeschlossen. Die Feder als solche ist drehbar, jedoch in Längsrichtung unverschiebbar in der Ausnehmung des Griffkörpers gehalten. Dies hat den Vorteil, daß beim Einführen des Bolzens in den Griff die nahe der Öffnung der Griffausnehmung liegende Abstützstelle der Feder nach unten verschwenkt, die Feder aber noch nicht gespannt wird. Vielmehr findet daß Spannen der Feder erst statt, wenn auch die zweite Abstützstelle der Feder zur Anlage am Bolzen gelangt. Diese Maßnahme bewirkt, daß der Bolzen bereits eine größere Strecke in die ihn allseitig führende Ausnehmung des Geschirrgriffes eintaucht, ehe die Feder einem weiteren Einschieben einen erhöhten Widerstand entgegensetzt. Hierdurch ist ein Verkanten ausgeschlossen, was bei einem sofortigen Spannen der Feder während des Bolzen-Einschiebens auftreten könnte.

Vorteilhaft kann eine konkav gekrümmte Feder verwendet werden, die aus einem Rundfederdraht besteht, und die mit ihrem Federrücken in einen Längsschlitz in der Ausnehmung eingreift, so daß sie seitlich gehalten ist. Die Feder kann dann frei um ihr Auflager am Federrücken verdreht werden. Zur Fixierung der Feder in Längsrichtung kann entweder an ihrem Rücken eine Nase angeformt sein, die in eine Bohrung in der Ausnehmung greift. Alternativ kann das hintere Ende der Feder nach außen abgewinkelt werden, damit es in eine in der Ausnehmung angeordnete Bohrung eingreift. Das Federende wird so lang gewählt, daß es auch dann noch in die Bohrung eingreift, wenn das vordere Ende ganz zum Boden der Ausnehmung hin verschwenkt ist.

Gemäß einem weiteren Vorschlag der Erfindung kann die Feder auch aus einem U-förmig gebogenen Federdraht bestehen, wobei die beiden Federschenkel gleichsinnig vom Federrücken etwa rechtwinklig abstreben und gegeneinander verschwenkt sind. Diese Feder wird beim Einschieben des Bolzens auf Torsion beansprucht; sie weist zwei Schwenkpunkte auf, die einander diagonal gegenüberliegen. Auch hierbei wird die Feder erst gespannt, wenn der Bolzen über die zweite, hinten liegende Stützstelle der Feder gleitet. Die Stützstellen der Feder haben vorteilhaft den Abstand voneinander, welcher der Länge der Feder entspricht, so daß ein möglichst großer Hebelarm erhalten wird.

Für eine Vormontage der Feder im Geschirrgriff für den Transport zum Anwender ist die Feder vorteilhaft in der Ausnehmung des Geschirrgriffes eingeklammert, was im einfachsten Fall bei einer konkaven Feder durch ein vorderes, nach außen abgewinkeltes Ende erhalten wird, das hinter eine Schulter des Griffkörpers greift. Diese Schulter muß so ausgebildet sein, daß ein freies nach unten Schwingen gewährleistet ist, jedoch ein vollständiges Herausheben der Feder aus der Führungsnut verhindert ist. Eine weitere Maßnahme für die Vormontage besteht darin, daß die Führungsnut für den Federrücken so schmal gehalten ist, daß der Federrücken unter leichter Klemmspannung in der Führungsnut gehalten ist.

Weitere vorteilhafte Ausgestaltungen der Erfindung gehen aus den Unteransprüchen in Verbindung mit Zeichnung und Beschreibung hervor.

Mehrere Ausführungsbeispiele der Erfindung sind im folgenden anhand der Zeichnung näher beschrieben, in dieser zeigen:

Fig. 1 eine Seitenansicht eines Stielgriffes gemäß der Erfindung, teilweise im Schnitt,

Fig. 2 den gleichen Stielgriff wie in Fig. 1, jedoch mit vormontierter und unbelasteter Feder,

Fig. 3 eine Stirnansicht auf den Griff nach Fig. 2,

Fig. 4 bis 7 drei Ausführungsformen von konkav ausgebildeten Federn,

Fig. 8 und 9 eine Draufsicht und eine Seitenansicht einer weiteren Ausführungsform einer U-förmig gestalteten Feder,

Fig. 10 die in eine Ausnehmung eines Griffes eingelegte und durch den Bolzen noch nicht belastete Feder gemäß Fig. 8 und 9 in Stirnansicht,

Fig. 11 einen Stielgriff im Schnitt mit einer Feder nach den Fig. 8 und 9 im montierten Zustand,

Fig. 12 einen Seitengriff gemäß der Erfindung und

Fig. 13 eine Stirnansicht auf einen Seitengriff gemäß der Erfindung mit zwei Federn, die in zwei senkrecht zueinander liegenden Ebenen angeordnet sind.

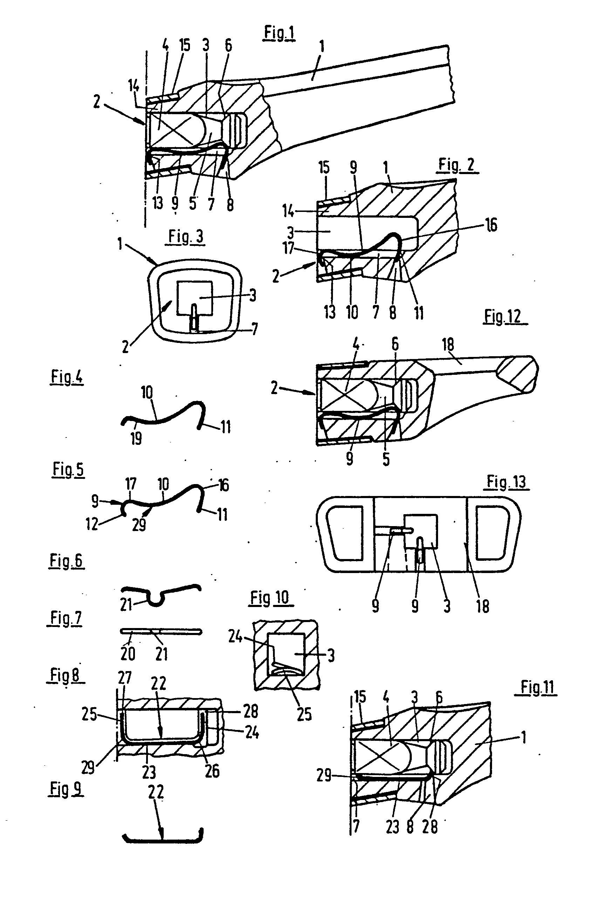

Der in den Fig. 1 bis 3 dargestellte Geschirrgriff 1 besteht aus einem Kunststoff und weist an seiner Stirnseite 2 eine Ausnehmung 3 auf, die quadratischen Querschnitt hat.

In die Ausnehmung 3 greift ein Bolzen 4 ein, dessen Länge etwas kürzer als die Länge der Ausnehmung 3 ist und der einen der Ausnehmung 3 angepaßten Querschnitt aufweist, so daß dieser geführt ist. Der Bolzen 4 ist durchgehend quadratisch ausgebildet und hat in seinem vorderen Bereich eine Einkerbung 5, die eine Schräge 6 bildet.

Im unteren Bereich der Ausnehmung 3 ist eine Nut 7 ausgebildet, in die eine Bohrung 8 mündet. In die Nut 7 ist eine Feder 9 eingesetzt, wie sie in Fig. 5 dargestellt ist. Die Führungsfläche für den Bolzen wird hierdurch nur geringfügig eingeschränkt, so daß die Halte- und Drehkräfte großflächig aufgenommen werden. Die Feder 9 hat einen konkav ausgebildeten Federrücken 10 und weist zwei nach außen winklig abgebogene Enden 11, 12 auf. Das Ende 11 ist länger ausgebildet als das Ende 12 und greift in die Bohrung 8 ein, wobei das Ende 11 so lang ausgebildet ist, daß dieses noch in die Bohrung 8 eingreift, wenn das vordere Ende der Feder ganz nach unten gedrückt ist. Die Feder stützt sich auf ihrem Federrucken 10 auf dem Grund der Nut 7 ab.

Das Ende 12 ist gleichfalls winklig nach außen abgebogen und greift hinter eine Schulter 13, die in der Nut 7 ausgebildet ist, wobei das Ende 12 so weit nach innen abgebogen ist, daß ein Herausfallen einer vormontierten Feder 9 aus der Nut 7 und damit aus der Ausnehmung 3 des Geschirrgriffes 1 verhindert ist.

Auf das vordere Ende 14 des Geschirrgriffes 1 ist eine Hülse 15 aufgesetzt, die bis zur Stirnseite 2 des Geschirrgriffes 1 reicht. Hierdurch ist gewährleistet, daß der Geschirrgriff sich nicht nur über die Hülse 14 an der Topfwandung abstützt, sondern auch über die stirnseitigen Kunststoffteile, so daß der Bolzen 4 unmittelbar neben seiner Befestigungsstelle abgestützt ist. Dies hat den Vorteil, daß bei einer weichen Geschirrwandung, die z.B. aus Aluminium bestehen kann, eine Verformung derselben weitgehend vermieden ist.

Der Bolzen 4 ist an der Geschirrwandung befestigt. Beim Einschieben des Bolzens 4 in die Ausnehmung 3 gleitet dieser zunächst über die drehbar um ihren Auflagepunkt schwenkbar angeordnete Feder 9, ohne daß diese gespannt wird. Hierdurch ist erreicht, daß der Bolzen fast bis zu 2/3 der Länge der Ausnehmung 3 bereits in diese eingeschoben ist, ehe eine Verformung der Feder 9 eintritt, was eine erhöhte Einschiebkraft erfordert. Zu diesem Zeitpunkt ist der Bolzen jedoch bereits in der Ausnehmung 3 so gut geführt, daß ein Verkanten des Bolzens beim weiteren Einschieben ausscheidet. Der Bolzen 9 gleitet dann auf die Abstützstelle 16 der Feder 9 auf, wobei die Abstützstelle 16 um ihren Drehpunkt am Federrücken nach unten verschwent wird und die am gegenüberliegenden Ende liegende Abstützstelle 17 am Bolzen zur Anlage kommt. Die Feder 9 bildet dann mit ihren beiden Abstützstellen 16, 17 eine Wippe, die den Bolzen 4 gegen die gegenüberliegende Fläche der Ausnehmung preßt, so daß dieser im Bereich seiner vorstehenden Teile gegen den Geschirrgriff 1 gepreßt wird. Aufgrund des großen Abstandes der Abstützstellen 16, 17 voneinander wird bereits ein großes Moment bei einer relativ kleinen Feder erhalten, so daß ein kippfreier Halt des Bolzens im Geschirrgriff 1 erreicht wird.

Bei dem in Fig. 12 dargestellten Griff handelt es sich um einen Seitengriff 18, der über wahlweise einen oder zwei Schweißbolzen 4 an der Geschirrwandung befestigt ist. Hier wird die gleiche Feder 9 verwendet, wie sie auch zur Befestigung des Geschirrgriffes 1 dient, der als Stielgriff ausgebildet ist.

In Abänderung der Seitengriffbefestigung nach Fig. 12 ist der Seitengriff 18 nach Fig. 13 jedoch nur mit einem Bolzen, jedoch mit zwei Federn 9 befestigt, die in einer um 90° zueinander versetzten Ebene liegen. Hierdurch ist erreicht, daß der Bolzen in eine Ecke der Ausnehmung 3 gepreßt wird, was neben der durch zwei Federn erhöhten Anpreßkraft gleichzeitig eine erhöhte Verdrehsicherung und Toleranzausgleich mit sich bringt.

Bei der Feder 19 nach Fig. 4 handelt es sich um eine gleichfalls konkav gekrümmte Feder mit einem Federrücken 10, bei der lediglich ein abgewinkeltes Ende 11 vorgesehen ist, das in die Bohrung 8 im Geschirrgriff 1 eintaucht. Bei Verwendung einer Feder 19 muß ein sicherer Sitz der Feder in der Nut 7 dadurch erreicht werden, daß die Nut etwas enger gehalten ist und so der Federrücken in dieser leicht eingeklemmt ist.

Bei dem Ausführungsbeispiel einer Feder 20 nach den Fig. 6 und 7 sind die beiden Enden lediglich abgerundet, um ein Auflaufen des Bolzens und ein Anliegen der Abstützstelle 16 an der Schräge 6 des Bolzens zu erleichtern. Hier ist zu einer Fixierung der Feder 20 in Längsrichtung der Ausnehmung 3 am Federrücken eine Nases 21 angeformt, die in eine dann mittig in der Nut 7 angeordnete und nicht dargestellte Bohrung greift. Ansonsten ist die Funktion der Feder die gleiche wie diese anhand einer Feder nach Fig. 5 beschrieben ist.

Die Feder 22 nach den Fig. 8 und 9 ist U-förmig ausgebildet und hat einen Federrücken 23, an dem in etwa rechtwinklig zwei Federschenkel 24, 25 angeformt sind. Wie Fig. 9 und 10 zeigen, ist der Federschenkel 24 gegenüber dem Federschenkel 25 verschränkt, wobei sein Ende in der Zeichenebene gemäß Fig. 9 nach oben zeigt. Eine Stirnansicht der Feder 22 zeigt Fig. l0. Fig. 10 zeigt den Federschenkel 25 in sich gekrümmt, was den zusätzlichen Vorteil bringt, daß aus dem Federschenkel 25 noch eine zusätzliche Federwirkung erhalten wird.

In Fig. 11 ist ein Geschirrgriff 1, der als Stielgriff ausgebildet ist, im auf dem Bolzen 4 montierten Zustand gezeigt. Der Federrücken 23 liegt wieder in einer Nut 7, wobei der Montagehalt dadurch erreicht wird, daß dieser leicht in die Nut 7 eingeklemmt ist. Beim Einschieben des Bolzens 4 wird zunächst der Schenkel 25 in die in diesem Ausführungsbeispiel stirnseitig umlaufende Nut 7 gedrückt, so daß auch hier der Bolzen 4 ohne ein Spannen der Feder 22 bis zu 2/3 in die Ausnehmung 3 eingeschoben werden kann. Erst wenn das vordere Ende des Bolzens 4 auf den ansteigenden Schenkel 24 trifft, wird dieser durch den Bolzen nach unten in die Nut gebogen, wobei eine Verschwenkung der Feder 22 um die beiden Lagerstellen 26, 27 eintritt, wie sie in Fig. 8 gezeigt sind. Die Feder 22 legt sich dann mit ihren beiden Abstützstellen 28 und 29 an den Bolzen 4 an, wobei die Abstützstelle 28 an der Schräge 6 zur Anlage kommt und den Geschirrgriff 1 gegen die Geschirrwandung preßt.

Wird der Schenkel 25 gekrümmt ausgebildet, wie dies in Fig. 10 dargestellt ist, so wird vom Federschenkel 25 ein zusätzlicher Druck auf den Bolzen 4 ausgeübt.

Für die Demontierung eines Seitengriffes oder eines Stielgriffes braucht lediglich der Griff mit erhöhter Kraft vom Geschirr abgezogen zu werden, wobei vorteilhaft ein Schraubenzieher zur Hilfe genommen wird, der zwischen die Stirnseite 2 des Griffes 1 bzw. 18 und der Geschirrwandung eingesetzt wird. Die Absttzstelle 27 bzw. 16 gleitet dann die Schräge 6 am Bolzen 4 hinauf und wird nach Überschreiten derselben entspannt, so daß dann der Griff leicht wieder vom Bolzen 4 abgezogen werden kann.

Vorteilhaft ist die Feder 10, 22 derart senkrecht zu ihrer Erstreckungsrichtung leicht gekrümmt ausgebildet, daß diese in der sie aufnehmenden Nut unter Spannung gehalten ist. Hierdurch wird ein Herausfallen der vormontierten Feder beim Transport verhindert.

**Patentansprüche**

1. Geschirrgriff mit einem Griffkörper (1, 18) aus Kunststoff, der eine stirnseitige Ausnehmung (3) zur Aufnahme eines am Geschirr befestigbaren Bolzens (4) hat, wobei die Querschnitte der Ausnehmung und des Bolzens vieleckig sowie aufeinander abgestimmt sind und wobei der Bolzen (4) eine Einkerbung (5) mit einer Schräge (6) aufweist, ferner mit einer zum kraftschlüssigen Zusammenhalten von Bolzen und Griffkörper dienenden, in letzterem gehaltenen und auf die Schräge (6) des Bolzens einwirkenden Feder (9, 22), die zwei mit Abstand zueinander liegende Abstützstellen (16, 17; 28, 29) besitzt, die um zumindest eine Lagerstelle (10; 26, 27) am Griffkörper (1, 18) schwenkbar ist und deren Rücken (10, 23) in der Ausnehmung (3) im wesentlichen in Längsrichtung des Bolzens (4) liegt, dadurch gekennzeichnet, daß die Feder (9, 22) mit ihrem Rücken (10, 23) aufliegend frei verdrehbar gelagert ist, wobei zwei in Bezug auf den Rücken abstrebend gerichtete Feder-Enden (11, 12) bzw. -Schenkel (24, 25) am Griffkörper (1, 18) rastend gehalten sind und die Feder ferner derart ausgebildet und gelagert ist, daß ein Spannen der Feder (9, 22) erst erfolgt, wenn beide Abstützstellen (16, 17; 28, 29) am Bolzen (4) anliegen, und daß die Feder (9, 22) senkrecht bzw. quer zu Längsrichtung des Bolzens (4) in einer Nut (7) der Ausnehmung (3) seitlich geführt ist.

2. Geschirrgriff nach Anspruch 1, dadurch gekennzeichnet, daß die Feder (9) konkav ausgebildet ist und ihr Rücken (10) in die zur Längsrichtung des Bolzens (4) parallel verlaufende Nut (7) eingreift.

3. Geschirrgriff nach Anspruch 1 oder 2, dadurch gekennzeichnet, daß ein Ende (11) der Feder (9) nach außen winklig abgebogen und in einer Bohrung (8) frei beweglich geführt ist.

4. Geschirrgriff nach Anspruch 2, dadurch gekennzeichnet, daß das andere Ende (12) der Feder (9) gleichfalls nach außen winklig abgebogen ist und hinter eine Schulter (13) des Griffkörpers (1) greift.

5. Geschirrgriff nach Anspruch 1, dadurch gekennzeichnet, daß die Feder (20) konkav ausgebildet und auf der äußeren Seite des Federrückens eine Nase (21) angeformt ist.

6. Geschirrgriff nach Anspruch 1, dadurch gekennzeichnet, daß die Feder (22) U-förmig mit einem Federrücken (23) und mit zwei Federschenkel (24, 25) ausgebildet ist, wobei letztere etwa senkrecht zur Längsrichtung des Bolzens (4) bzw. der Ausnehmung (3) liegen, und daß die beiden Federschenkel (24, 25) gegeneinander verschränkt sind.

7. Geschirrgriff nach Anspruch 6, dadurch gekennzeichnet, daß einer der Federschenkel (24, 25) in sich gekrümmt ist.

8. Geschirrgriff nach einem der Ansprüche 1 bis 7, dadurch gekennzeichnet, daß für die Befestigung des Griffkörpers (1) an einem Bolzen (4) mehrere in verschiedenen Ebenen liegende Federn (9, 22) vorhanden sind.

9. Geschirrgriff nach einem der Ansprüche 1 bis 8, dadurch gekennzeichnet, daß der Griffkörper (1) bündig mit einer an seinem Ende (14) befestigten Hülse (15) abschließt.

10. Geschirrgriff nach einem der Ansprüche 1 bis 9, dadurch gekennzeichnet, daß die Feder (10, 22) zwecks Transportsicherung senkrecht zu ihrer Längsrichtung derart gekrümmt ausgebildet ist, daß sie in der Nut (7) unter Spannung gehalten ist.

**Revendications**

1. Poignée d'ustensile de cuisine comportant un corps (1, 18) en matière plastique, qui présente une cavité frontale (3) servant à recevoir un goujon (4) pouvant être fixé à la poignée, les sections transversales de la cavité et du goujon ayant des formes polygonales et étant adaptées l'une à l'autre, et le goujon (4) comportant une gorge (5) présentant un biseau (6), la poignée comportant en outre un ressort (9, 22) qui sert à maintenir le goujon et le corps de la poignée réunis selon une liaison de force, qui est retenu dans le corps de la poignée et agit sur le biseau (6) du goujon, qui comporte deux parties d'appui (16, 17; 28, 29) distantes l'une de l'autre qui peut pivoter par rapport au corps (1, 18) de la poignée autour d'au moins un point de pivotement (10; 26, 27), et dont la base (10, 23) s'étend dans la cavité (3) sensiblement dans la direction longitudinale du goujon (4), caractérisée en ce que le ressort (9, 22) est monté, au niveau de sa base (10, 23), de manière à pouvoir tourner librement, deux extrémités (11, 12) ou branches (24, 25) du ressort, qui sont orientées de manière à s'écarter de la base, étant maintenues par encliquetage sur le corps (1, 18) de la poignée et le ressort (9, 22) étant agencé et supporté de sorte qu'une mise sous contrainte de ce ressort est obtenue lorsque les deux parties d'appui (16, 17; 28, 29) s'appliquent sur le goujon (4), et en ce que le ressort (9, 22) est guidé latéralement, perpendiculairement ou transversalement par rapport à la direction longitudinale du goujon (4), dans une rainure (7) de la cavité (3).

2. Poignée d'ustensile de cuisine selon la revendication 1, caractérisée en ce que le ressort (9) est concave et que sa base (10) s'engage dans la rainure (7), qui est parallèle à la direction longitudinale du goujon (4).

3. Poignée d'ustensile de cuisine selon la revendication 1 ou 2, caractérisée en ce qu'une extrémité (11) du ressort (9) est recourbée vers l'extérieur selon une configuration anguleuse et est guidée, de manière à être librement mobile, dans un perçage (8).

4. Poignée d'ustensile de cuisine selon la revendication 2, caractérisée en ce que l'autre extrémité (12) du ressort (9) est également repliée vers l'extérieur avec une forme anguleuse et s'engage derrière un épaulement (13) du corps (1) de la poignée.

5. Poignée d'ustensile de cuisine selon la revendication 1, caractérisée en ce que le ressort (20) est concave et qu'un nez (21) est formé par façonnage sur la face extérieure du dos du ressort.

6. Poignée d'ustensile de cuisine selon la revendication 1, caractérisée en ce que le ressort (22) possède la forme d'un U comportant une base (23) et deux branches (24, 25), ces dernières étant approximativement perpendiculaire à la direction longitudinale du goujon (4) ou de la cavité (3), et que les deux branches (24, 25) du ressort sont décalées l'une par rapport à l'autre.

7. Poignée d'ustensile de cuisine selon la revendication 6, caractérisée en ce que l'une des branches (24, 25) du ressort est recourbée.

8. Poignée d'ustensile de cuisine selon l'une des revendications 1 à 7, caractérisée en ce que pour la fixation du corps (1) de la poignée sur un goujon (4), il est prévu plusieurs ressorts (9, 22) situés dans des plans différents.

9. Poignée d'ustensiles de cuisine selon l'une des revendications 1 à 8, caractérisée en ce que le corps (1) de la poignée se termine en continuité avec une douille (15) fixée à l'extrémité (14) du corps.

10. Poignée d'ustensiles de cuisine selon l'une des revendications 1 à 9, caractérisée en ce que, pour la sécurité lors du transport, le ressort (10, 22) est recourbé perpendiculairement à sa direction longitudinale de telle sorte qu'il est maintenu sous tension dans la rainure (7).

**Claims**

1. A kitchen utensil handle having a handle body (1, 18) made of plastics material, which has an end face recess (3) for receiving a bolt (4) fixable to the kitchen utensil, the cross-sections of the recess and the bolt being polygonal and adapted to correspond to one another, and the bolt (4) having a notch (5) with a bevel (6), the handle also having a spring (9, 22) for non-positively holding together the bolt and the handle body, which spring is held in the handle body, acts on the bevel (6) of the bolt, has two bearing points (16, 17; 28, 29) spaced from one another, and is pivotable about at least one bearing point (10; 26, 27) on the handle body (1, 18), the back (10, 23) of the spring lying in the recess (3) substantially in the longitudinal direction of the bolt (4), characterised in that the spring (9, 22), resting on its back (10, 23), is mounted freely rotatably, two spring ends (11, 12) or flanges (24, 25) which are oriented downwards relative to the back being engaged in the handle body (1, 18) and the spring being so formed and mounted that stressing of the spring (9, 22) takes place only when both bearing points (16, 17; 28, 29) rest on the bolt (4), and in that the spring (9, 22) is laterally guided perpendicularly or transversely to the longitudinal direction of the bolt (4) in a groove (7) of the recess (3).

2. A kitchen utensil handle according to claim 1, characterised in that the spring (9) is concave in form and its back (10) engages in the groove (7) running parallel to the longitudinal direction of the bolt (4).

3. A kitchen utensil handle according to claim 1 or 2, characterised in that one end (11) of the spring (9) is bent back outwards at an angle and is guided freely movably in a bore (8).

4. A kitchen utensil handle according to claim 2, characterised in that the other end (12) of the spring (9) is also bent back outwards at an angle and engages behind a shoulder (13) of the handle body (1).

5. A kitchen utensil handle according to claim 1, characterised in that the spring (20) is concave in form and a projection (21) is moulded on to the exterior of the spring back.

6. A kitchen utensil handle according to claim 1, characterised in that the spring (22) is U-shaped with a spring back (23) and two spring flanges (24, 25), the latter lying approximately perpendicular to the longitudinal direction of the bolt (4) or of the recess (3), and in that the two spring flanges (24, 25) are crossed relative to one another.

7. A kitchen utensil handle according to claim 6, characterised in that one of the spring flanges (24, 25) is itself curved.

8. A kitchen utensil handle according to one of claims 1 to 7, characterised in that a plurality of springs (9, 22) lying in different planes are provided for fixing the handle body (1) to a bolt (4).

9. A kitchen utensil handle according to one of claims 1 to 8, characterised in that the handle body (1) ends flush with a sleeve (15) fixed to its end (14).

10. A kitchen utensil handle according to one of claims 1 to 9, characterised in that the spring (10, 22) is bent perpendicular to its longitudinal direction for the purpose of fixing during transport, in such a manner that it is held stressed in the groove (7).

EP 0 205 665 B1

Fig.1

Fig. 2

Fig. 3

Fig.4

Fig.5

Fig.6

Fig.7

Fig.8

Fig.9

Fig 10

Fig.11

Fig.12

Fig. 13

1